# EUROPEAN PATENT SPECIFICATION

(11) **EP 3 409 468 B1**
(45) Date of publication and mention of the grant of the patent: **19.08.2020**
(21) Application number: 17174111.9
(22) Date of filing: 01.06.2017
(51) Int. Cl.: B32B 27/00, B32B 7/12, B32B 27/12

(54) **AESTETIC FLOOR COVERING SYSTEM**
ÄSTHETISCHES BODENBELAGSSYSTEM
SYSTÈME DE REVÊTEMENT DE SOL ESTHÉTIQUE

(43) Date of publication of application: 05.12.2018
(73) Proprietor: Autoneum Management AG, 8406 Winterthur (CH)
(72) Inventor: Loisier, Flavien, Heckmondwike, WF169NQ (GB); Taylor, James, 8604 Volketswil (CH)

(56) References cited:
- WO-A1-2004/006736
- GB-A- 1 091 523
- US-A1- 2012 121 849

## Description

### Technical Field

The invention is directed to an aesthetic floor covering system for vehicles and a method for producing such an aesthetic floor covering system.

### Background Art

Today automotive flooring covering systems are made with a tufted or nonwoven surface facing the passenger area. Such flooring systems are usually moulded to comply with the shape of the cars body in white for instance including or levelling out any humps or ribs for power train or chassis. These floor coverings require high wear resistance in the areas where the passenger or other cargo touch or scuff the surface, in addition the flooring system must be able to resist puncture. These mechanical properties are obtained by the intrinsic stiffness of the needle punched nonwoven carpet layer or by the decoupling layer or layers used to make the tufted carpet surface, in particularly the layers holding the tufts and the adjacent coupled decoupling layer. Underneath the initial tufted or nonwoven surface layer a mass layer may be used to increase the weight of the flooring system. This might be combined with a spring type or decoupling layer in the form of foam or felt layer.

State of the art mass layer - also known as heavy layer- material is made as a semi-finished product based on thermoplastic compound as a binder, preferably ethylene-propylene-diene rubber (EPDM) and/or ethylene vinyl acetate (EVA) and/or thermoplastic elastomers based on olefin (TPO), and a filler for instance barium sulphate and/or chalk. The thermoplastic material is mixed and calendared in the required thickness and sold as a semi-finished product. The semi-finished product is moulded to the required shape eventually laminated or combined with the other layers to form the flooring system. The semi-finished product may be formed and back foamed before the carpet surface -tufted or nonwoven- is laminated on top.

In 1960ties and 1970ties an alternative flooring system was used combining rubber floor mats with flock coated areas for instance GB 1091523 discloses a combined floor system with a base sheet formed of a thermoplastic material, bonded fiber fabric or vulcanized rubber material. This base sheet is flock coated with fibers using curable latex adhesives based on natural or synthetic rubber. Already the patent discloses the biggest problem of these adhesives, as the disclosure states that the adhesive bonding the flocks might be scraped off the base sheet by abrasion. The parallel application GB 1091524 gives as solution for this problem the usage of depressions in the base sheet surface in which the fibers are bonded in tufts preventing the scraping off from happening. However, this would complicate the surface structure and not all customers like to have indented floor surfaces.

Although in general flocked products were introduced in the car in the 60ties and 70ties, they disappeared again as covering for the major floor area due to low wear and poor surface coverage of the fibers.

There is a trend in changing usage of cars, more people will likely jointly own or share a car. In addition, new car systems, like battery electric vehicles or autonomous driven vehicles are introduced in the market.

These cars will have an increased need for high wear and cleanable flooring in particularly for the main floor area between and underneath the seats. However, these carpet systems also function and will continue to function as noise attenuating trim parts, whereby a mass layer together with a decoupling layer form a spring mass system.

In the state of the art nonwoven carpets the nonwoven top layer is mainly responsible for the mechanical structure and performance, like tear resistance and puncture resistance, while in tufted carpets this function is taken by the primary and secondary decoupling layers of the tufted carpet. By reducing these forms of surface layer, the mechanical structural properties are no longer given.

It is the object of the invention to introduce an alternative to the currently sold nonwoven or tufted carpet systems, with a high wear and cleanable surface, however maintaining the noise attenuating properties.

### Summary of invention

This object is achieved by a floor covering system with the features of claim 1, and by a method with the features of claim 12.

Moulded floor covering system for acoustic attenuation of an automotive vehicle comprising a surface layer, a decoupling layer (4) and an impervious base layer (3) functioning as a barrier layer in an acoustic spring mass system and materially connected to the spring layer formed by the decoupling layer characterised in that the surface layer comprises an adhesive layer (2) jointed to the surface of the base layer and an adherent pile of fibrous flock (1) standing substantially on end in the adhesive forming the surface coverage and whereby the impervious base layer consist of a thermoplastic elastomeric base layer with a density of at least 0.5 kg/m³ comprising of a polyolefin based material and at least an inorganic filler, whereby the total filler content is between 65 and 95% by weight.

Surprisingly by combining an acoustic insulating system with a flocked surface it is possible to obtain a floor covering that is resistant to high wear and puncture and at the same time can perform as an acoustic floor covering for the main floor and dash area of a vehicle.

Preferably by adding an additional reinforcing layer adjacent and bonded to the elastomeric base and whereby the reinforcing layer is at least one of a nonwoven scrim layer, a textile layer like a knit, woven fabric, or a fibrous layer, it is possible to further diminish the risk of puncture of the floor system. Surprisingly already a nonwoven scrim layer firmly attached to the elastomeric base reduces the risk to puncturing, to a level comparable with state of the art carpets with nonwoven or tufted surfaces.

Preferably the reinforcing layer is attached to the back of the elastomeric layer or integrally with or within the elastomeric layer. The reinforcing layer is preferably substantially parallel to the surface elastomeric base layer.

Preferably the base layer including the reinforcing layer has a Young's modulus of between 20 and 135MPa, preferably under 100MPa, more preferably between 30 and 60MPa enhancing the tear performance of the floor system and puncture resistance.

Surprisingly by using water based adhesive for binding the flock fibers to the elastomeric base material it is not only possible to reduce any volatile organic compound(s) release from the floor into the passenger compartment, it also shows a very high abrasion resistance and hardly any scraping off of the fibers on the surface.

The abrasion performance may be further enhanced by a fibrous flock comprising cut solid staple fibers with a length of between 1.5 and 3.5 mm, preferably between 2-2.5 mm. Preferably, the fibers have a fineness of between 10 and 25dtex, preferably between 11 and 17dtex.

It was found that using this length of fibers and preferably the range of fineness given, it is not only possible to increase the abrasion resistance of the surface layer, but also to obtain an improved soft touch haptic.

Surprisingly a combination of 1.5-2.5mm and a fineness of 11 or 17 for instance would give a moulded carpet system with a very good abrasion or wear and at the same time an optimised touch haptic, comparing with normal standard car tufted carpet, more soft and lush than expected.

Preferably the thickness of the adhesive layer after drying is such that at least 6% of the length of the fibers, preferably at least 10%, can stand in the glue layer substantially perpendicular to the surface of the base layer, further enhancing the abrasion performance. Preferably on average not more than 15% of the length of the fibers will be within the glue when the fibers are directed perpendicular to the surface of the dried adhesive.

For example with a fiber length of 2 mm, it is possible to create a pile height above the glue of around 1.9-1.7mm on average.

Preferably the moulded floor covering system according to the invention has an abrasion of at least 6500 cycles, preferably 8000 cycles, more preferably at least 10.000 cycles. Abrasion is measured using the Taber test, preferably according to ISO SAE J1530 using H18 wheels and 10N pressure.

Surprisingly by using the carpet floor system according to the invention a much better wear performance could be achieved in comparison to standard nonwoven or tufted carpets, making it a much durable solution for cars in particular for multi owner/user car systems.

As an adhesive for holding the cut fibers substantially perpendicular to the surface of the elastomeric base layer preferably water based adhesive, more preferably a water based adhesive based on polyurethane or acrylic, might be used. Preferably an adhesive system that cures and or solidifies during drying is used.

Preferably the adhesive layer has an area weight of between 150 and 300 g/m². Preferably the adhesive layer has a thickness of between 0.2 and 4 mm after final drying of the applied layer.

Preferably the adhesive is coloured to match the colour of the base and or cut fibers used. Preferably between 2 and 4% by weight of colour might be added without reducing the adhesive performance.

In the carpet system according to the invention a fibrous flock is used made of cut staple mono component fibers.

The fibers used are cut staple fibers, with a fiber length of between 1.5 and 3.5 mm, preferably between 2 and 2.5 mm. The fibers are preferably precision cut to obtain a small fiber length distribution.

During the production of the filaments also known as continuous filament tow into cut fibers, the surface of the fibers might be treated to enhance the static properties of the fibers during the flocking process.

The cutting of the fibers is the preferred solution to obtain short fibers as it may prevent any damage to the fiber, resulting in a better defined surface of the final product, in particular a better fiber length distribution, ergo closer to the wanted length, and a cleaner cut surface.

The fibers used can be of man-made fibers, preferably nylon, acrylic, mod-acrylic, polyester or rayon. The cut staple fibers are mono component cut filaments, preferably made of polyamide, preferably polyamide 6 or polyamide 6-6, or polyester, preferably poly ethylene terephthalate, or a polyolefin, preferably polypropylene or polyethylene.

To achieve very good abrasion Polyamide, preferably polyamide 6 or polyamide 6-6 are used.

The fibers might have a solid or hollow cross section. In addition the shape of the cross section might be variable, for instance round, trilobal, delta or multi-lobal to obtain differences in surface aesthetics for instance. Preferably a round cross section is used, and they can be mixed with or fully replaced by trilobal cross section fibers to increase the lustre of the surface obtained.

The fiber flock application process consists of coating the base layer with the adhesive at least in one section, applying the flock fibers on the base layer electrostatically. For this purpose, the flock fibers are introduced into a high voltage field as a result of which, as charge carriers, , the fibers are transported to the adhesive-coated substrate at right angles. The adhesive coated base layer surface forms the earth pole and may be vibrated by electro pneumatic means. The fibers that penetrated the adhesive layer are retained there, forming a dense pile. Excess flock may be removed by suction and the product may be dried for instance using drying means like a hot air. Free fibers can be removed by brushing and or suction for instance.

The final fibrous surface layer formed has an area weight of between 100 and 380 g/m² based on the fiber content alone. In particularly on the section less prone to abrasion the lower area weight might be used and depending on the abrasion intensity the area weight, hence the density of the pile can be increased.

The moulded floor covering system according to the invention comprises a thermoplastic elastomeric base layer comprising at least an inorganic filler, like for instance barium sulphate or calcium carbonate. The total filler content is between 65 and 95% by weight.

The thermoplastic base layer is functioning as a barrier layer in an acoustic spring mass system and should be impervious as well as materially connected to the spring layer formed by the decoupling layer, at least for the main part of the surface.

Preferably, the base layer is made of a material selected from the group consisting of ethylene vinyl acetate (EVA) copolymer, high density polyethylene, low density polyethylene, linear low density polyethylene, polypropylene, or any combination of the foregoing.

The area weight of the elastomeric base material is preferably between 500 and 6000 g/m², preferably between 500 and 2500 g/m².

The thickness of the material is preferably between 0.5 and 6 mm and might vary throughout the part.

The moulded floor covering system according to the invention further comprises a decoupling layer adjacent the thermoplastic elastomeric base layer including the preferable reinforcement layer. The decoupling layer can be one of an open cell foam layer, either slab foam or injected foam, open pour foam or a fibrous felt material.

The fibrous felt layer used as decoupling layer may comprise of a binder and fibers, or fibers alone.

The binder can be any type of thermoplastic material that can melt during moulding and bind the fibers together to form a consolidated fibrous layer.

Alternatively, or additionally the felt layer can be consolidated by a mechanical process known in the art for instance needling.

The fibers used might be staple fibers or endless filaments. If the word fibers is used both staple fibers and endless filaments are meant except if the type of fibers is explicitly mentioned.

The fibers comprise at least one of natural fibers, like cotton, mineral fibers, like glass or basalt fibers, or man-made fibers selected from the consisting of, polyamide (nylon) such as polyamide 6 or polyamide 66, polyester such as polyethylene terephthalate (PET) or polyolefin such as polypropylene or polyethylene or mixtures thereof.

The fibers might come from a virgin, reclaimed or recycled source, for instance in the form of shoddy material, preferably shoddy cotton, synthetic shoddy, polyester shoddy or natural fiber shoddy.

Reclaimed fibers are preferably produced from textile fabrics. The shoddy type is defined by having at least 51% by weight of the material included, 49% can come from other sources. So for instance shoddy polyester contains at least 51% by weight of polyester based materials. Alternatively the shoddy material can be a mixture of different synthetic and natural fibers, whereby not one type is prevailing.

The fibers may also come from regenerated sources, like for instance regenerated polyester.

The fibers used for the decoupling layer may have a solid cross section but also fibers with a hollow cross section might be preferred or a combination of fibers with a hollow and solid cross section might be used. For instance to further enhance the durability and or to obtain a lighter part.

Surprisingly the use of a combination of fibers including frizzy fibers for instance hollow conjugate curled fibers further enhances the loftiness and softness of the decoupling layer and the acoustic performance of the overall moulded floor covering system.

In case of staple fibers used for the decoupling layer they have preferably a fiber length of between 28-76mm, preferably between 32-64 mm.

The fibers - staple fibers or endless filaments, used for the decoupling layer are preferably between 1.7 and 28 dtex, preferably between 3 and 15 dtex, preferably between 3 and 12 dtex.

Eventually foam chips might be added to the decoupling layer based on fibrous felt. Preferably up to 30%, more preferably up to 25% of the total area weight of the layer might be foam chips or shredded foam. Preferably the foam is based on polyurethane foam, preferably soft polyurethane foam. The density of the foam used is preferably between 10 and 100 kg/m-3, preferably between 20 and 90 kg/m3. the size of the shredded foam pieces or chips is preferably between 2 and 20 mm, preferably between 3 and 15 mm.

Preferably the fibers in the layer are bonded with a thermoplastic binder. The binder can be applied in the form of a powder, flakes or fiber.

As thermoplastic binder preferably at least one of the materials selected form the group consisting of polyester, preferably polyethylene terephthalate, polyolefin, preferably polypropylene or polyethylene, polylactic acid (PLY) and polyamide such as polyamide 6 or polyamide 66, or any of their copolymers may be used.

For example as binder a low melt polyester or polyolefin with a melt point lower than the filler fibers can be used. Preferably bi-component fibers might be used for instance a core sheath type of fiber with the sheath forming the binder component and the core forming the fiber felt material. For instance a coPET/PET bicomponent fiber whereby the coPET forms the binder and the PET forms the fibers within the felt material after moulding.

Preferably at least 0-50% by weight of the final felt material is formed by binder, preferably 10-40%, and even more preferred 20-30% by weight. The binder is preferably applied in the form of fibers.

Preferably the decoupling layer has an area weight of between 80 -2500 g.m⁻², preferably up to 1200 g.m⁻² preferably up to 1000g.m⁻².

The fibrous layer after moulding might be having a constant area weight or a constant density. The thickness and area weight might also vary over the surface depending on the final shape and acoustic requirements.

The fibrous layer might be produced according to known processes for instance using the process of carding, cross lapping and needling or the alternative process of air laid and eventually needling to produce a consolidated fibrous mat the mat can be cut in blanks to be used in the moulding process. Alternatively, the fibrous material can be directly laid into a mould and consolidated for instance using the device for moulding fibrous material as disclosed in EP 2640881**.**

As a decoupling layer also a standard open cell foam material may be used as an alternative according to the invention. The decoupling layer may be formed from any type of thermoplastic or thermosetting foam. Preferably the decoupling layer is made of polyurethane foam.

Preferably the foam has a density between 25 to 100 Kg/m³, preferably 35 to 80 Kg/m³, preferably 45 to 70 Kg/m³.

The decoupling layer has preferably a low compression stiffness of less than 20 kPa, preferably above 4 kPa, preferably between 5 and 15 kPa, preferably between 5 and 10 kPa, measured according to the current ISO 3386-1. The measured stiffness is the compression stress value CV40, also called CLD40 value, measured at 40% compression. In general a softer foam is better from acoustic point of view but might have the drawback of having too low rigidity such as tread strength, for instance being too soft and spring back too much when pressing on the trim part for example when standing on the trim part while stepping in or out of the vehicle.

The foam can be produced in foam blocks and cut in to layers with the right thickness to be moulded to the final part. Alternatively, it may be applied according to the reaction injection moulding process whereby the foam is directly reacting in the mould forming the final shape. Preferably it is attached to the thermoplastic elastomeric layer during injection moulding of the foam, preferably on the surface including the reinforcement layer. All 3 layers forming a bonded shaped part.

The thickness and stiffness of the decoupling layer independent of the material chosen may be optimised to meet acoustic and stiffness targets as well as overall rigidity requirements of the trim part. In addition, the thickness is dependent on space restrictions in the vehicle. Preferably the thickness can be varied over the area of the part to follow the available space in the vehicle. The thickness available may vary between 1 and 100 mm but in most cases the thickness varies between 5 and 40 mm. Typical overall average thickness of decoupling layers of a carpet or inner dash is normally between 15 and 25mm, e.g. in average about 20mm.

The method for producing the moulded floor covering system according to the invention comprises at least the following step in consecutive order where applicable:
1. Providing a moulded system comprising in consecutive order at least an elastomeric base layer, optionally a reinforcement layer and a decoupling layer moulded in the final wanted shape. Whereby all layers are materially connected to the adjacent layers. Preferably the reinforcement layer is integrally connected to the elastomeric base layer and the decoupling layer. The decoupling layer might be one of slab foam, injection foam, open poured foam or a fibrous felt material, preferably from shoddy fiber material.
2. Adding the adhesive to the surface of the elastomeric base material facing away from the optional reinforcement layer and adjacent decoupling layer. Preferably a water based adhesive is used with at least 50% initial water content. The water based adhesive should not form a skin during the process and should be viscous enough to hold up the fibers during application in a substantial perpendicular direction to the surface of the base layer. Preferably the adhesive has a viscosity of at least 1000mPas, preferably between 1100 and 6000mPas, preferably between 4500 and 5500mPas, for instance 5000mPas. (The viscosity can be measured with a Brookfield RVT with a spindle 3, at 20RP, 20°C)
3. Applying the cut staple fibers to the adhesive using an electrostatic application system. By applying at least an electrostatic driving force on charged flock fibers, the fibers are applied in a direction perpendicular to the surface of the elastomeric base material. In the moulded system according to the invention the surface of the elastomeric material is moulded into shape, the application system should be able to adapt to the contour of the surface to obtain an even surface effect with all fibers substantially perpendicularly to the surface of the elastomeric base layer, for instance, using a robotic arm.
4. Drying the moulded system such that the adhesive is cured and or consolidated to form a stable elastic layer holding the fibers in position.

The fiber application can be done for the entire surface of the moulded part at once or in sections. For instance the areas prone to high wear or more visible can be flocked with a higher length fiber while areas which are less visible or less prone to wear can be flocked with shorter length fibers. Alternatively the density of the fibers in the different areas can be varied, with lower densities in the low wear areas. This would have the advantage of saving weight in the overall trim part.

Also sections with different fiber density can be obtained by for instance decreasing the flocking distance, increasing the field strength and or the flocking time or by adding or increasing the electro pneumatic driving force.

Preferably between the surface to be covered and or the fiber or adhesive applicator, a template is placed provided with an opening of desired shape and dimension, before applying adhesive and or the cut fibers. More than one template can be used to form intricate patterns using different fiber sizes, fiber finesse and or colour and or structures. For instance areas can be filled with trilobal fibers to obtain areas with high lustre.

The fibers can be applied with electrostatic alone or in combination with electro pneumatic means.

The step of applying fibers might be repeated several times to increase the density of the fibers or to apply different types of fibers. If different fibers are required than also the step of applying adhesive might be repeated eventually in section. After each step of applying the fibers and preferably after an initial drying the adhesive the loose fibers might be taken off for instance by vacuum suction means and or by pneumatic means.

The adhesive might be dried in steps, in an initial step the adhesive is dried enough to prevent the fibers from falling out or moving away from the upright initial position, after this phase the material can be handled for instance for additional fiber applications, cleaning of loose fibers or cutting of the final part structure. In a second phase the adhesive is dried to form the final strong bond necessary to obtain the high wear and puncture resistance.

Before applying the adhesive a pre-treatment of the surface of the elastomeric base layer might be done to eliminate any impurities and to increase the surface tension to increase bonding.

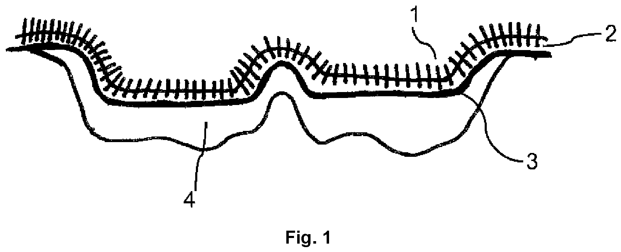

Figure 1 is showing a typical moulded floor covering system for acoustic attenuation of an automotive vehicle according to the invention comprising a thermoplastic elastomeric base layer 3 and a decoupling layer 4. It further comprises a surface layer consisting of an adhesive layer 2 jointed to the surface of the base layer 3 and an adherent pile of flock fibers 1 standing substantially on end in the adhesive 2 forming the surface coverage. The flock fibers are positioned substantially perpendicular to the surface of the elastomeric base layer.

In the following examples of the surface performance are given.

### Example 1

A thermoplastic elastomeric base material was formed of polyolefin elastomer (POE) with 80% filler content calendared into a thin flat layer of roughly 1000g/m². The surface was flamed to eliminate any impurities or release agents. The wet adhesive was applied with an initial area weight of 333 g/m². Polyamide 6 fibers with a length of 2.5mm and 11dtex fineness were used as fiber flock. The fiber flock was applied perpendicular to the surface using a hand held electrostatic flocking machine. The sample was dried and measured for weight and abrasion performance.

The final flock with an area weight of 259 g/m² gave a good surface coverage and a nice haptic soft touch. The amount of adhesive after drying was found to be 171 g/m².

Surprisingly the abrasion already reaches an average of 6168 cycles before a failure could be observed (failure means that the background in our case the elastomeric layer can be observed)

### Example 2

A second example was made in the same manner as example 1, with same base layer material and adhesive. On an average of 3 samples the 210 g/m² initial wet adhesive was applied and 104 g/m² was measured after drying.

Polyamide 6 fibers with a length of 2.5mm and 17dtex fineness were used as fiber flock.

Also here the fibers gave a good coverage, nice and pleasant aesthetics and haptic. The fiber area weight measured was on average 288 g/m² and the final adhesive after drying was around 104 g/m². For this example an even higher wear performance was observed with an average of 11734 cycles before the surface failed.

Although this sample has less weight of fibers and adhesive compared to example 1, it performed better in the wear test.

### Comparative example

A state of the art needle punched nonwoven moulded carpet sample with a 400g/m² fibrous surface only achieved 850cycles in comparison.

A state of the art polyester tufted carpet surface achieved 4900 cycles before failure with a standard surface weight of between 300 to 700g/m².

From these samples it can be seen that using the moulded floor covering according to the invention would enhance the optics and haptic as well as the wear in comparison to standard used floor systems.

## Claims

1. Moulded floor covering system for acoustic attenuation of an automotive vehicle comprising a surface layer, a decoupling layer (4) and an impervious base layer (3) functioning as a barrier layer in an acoustic spring mass system and materially connected to the spring layer formed by the decoupling layer **characterised in that** the surface layer comprises an adhesive layer (2) jointed to the surface of the base layer and an adherent pile of fibrous flock (1) standing substantially on end in the adhesive forming the surface coverage and whereby the impervious base layer consist of a thermoplastic elastomeric base layer with a density of at least 0.5 kg/m³ comprising of a polyolefin based material and at least an inorganic filler, whereby the total filler content is between 65 and 95% by weight.

2. Moulded floor covering system according to claim 1, further comprising a reinforcing layer adjacent and bonded to the base layer and whereby the reinforcing layer is at least one of a nonwoven scrim layer, a textile layer like a knit or woven fabric, or a fibrous layer.

3. Moulded floor covering system according to one of the preceding claims, whereby the adhesive layer is water based adhesive, preferably a polyurethane or acrylic based adhesive.

4. Moulded floor covering system according to one of the preceding claims, whereby the base layer is made of a material selected from the group consisting of ethylene vinyl acetate (EVA) copolymer, high density polyethylene, low density polyethylene, linear low density polyethylene, polypropylene, or any combination of the foregoing.

5. Moulded floor covering system according to one of the preceding claims, whereby the fibrous flock comprises solid staple fibers with a length of between 1.5 and 3.5 mm, preferably between 2-2.5 mm.

6. Moulded floor covering system according to one of the preceding claims whereby the fibrous flock is made of polyamide, preferably polyamide 6 or polyamide 6-6, or polyester, preferably poly ethylene terephthalate or a polyolefin, preferably polypropylene or polyethylene.

7. Moulded floor covering system according to one of the preceding claims whereby the fibrous flock has an area weight of between 100 and 500 g/m², preferably not more than 400g/m².

8. Moulded floor covering system according to one of the preceding claims whereby the abrasion is at least 6000 cycles until failure, more preferably at least 8000 until failure, preferably at least 10.000 cycles until failure, as measured with the Taber test according to ISO SAE J1530.

9. Moulded floor covering system according to one of the preceding claims whereby at least 6% and not more than 15% of the fiber length is within the glue for the majority of the fibers, preferably not more than 10%.

10. Moulded floor covering system according to one of the preceding claims with the height of the fibers sticking out of the adhesive layer forming the pile is between 1.2 and 3 mm.

11. Use of the moulded floor covering system according to one of the preceding claims as a sound insulating floor covering on the main floor of a vehicle with a diesel or petrol engine, battery electric vehicle, hybrid vehicles, fuel cell vehicles or an autonomous driving vehicle.

12. Method of producing the moulded floor covering system according to one of the preceding claims with the steps of
- providing a moulded part with at least a thermoplastic elastomeric base layer, an optionally reinforcing layer and a decoupling layer, whereby all layers are laminated together and formed into the final shape;
- applying at least once the wet additive to the surface of the thermoplastic base layer facing away from the decoupling layer;
- applying the flock fibers using electrostatic means such that the fibers are substantially perpendicular to the surface of the thermoplastic base layer and are anchored within the glue layer at least with 6% of the fiber length;
- drying the trim part such that the adhesive becomes solidified.

13. Method according to claim 12 whereby the fiber application is done in sections.

14. Method according to claim 12 or 13, whereby the fiber density, fiber type or fiber length is varied in different areas of the moulded part.

15. Method according to claim 12, 13 or 14, whereby at least one template provided with an opening of desired shape and dimension is used between the surface to be covered and or the fiber or adhesive applicator, before applying adhesive and or cut fibers.

## Patentansprüche

1. Geformtes Bodenbelagsystem zur akustischen Dämpfung eines Kraftfahrzeugs, das eine Oberflächenschicht, eine Abkopplungsschicht (4) und eine undurchlässige Grundschicht (3) umfasst, die als eine Barrierenschicht in einem akustischen System mit gefederter Masse funktioniert und materiell mit der Federschicht verbunden ist, die von der Abkopplungsschicht gebildet ist, **dadurch gekennzeichnet, dass** die Oberflächenschicht eine Klebeschicht (2) umfasst, die an die Oberfläche der Grundschicht anschließt, und ein haftendes Flor aus Flockfasern (1), das im Wesentlichen in dem Klebstoff, der die Oberflächenabdeckung bildet, hochkant steht, und wobei die undurchlässige Grundschicht aus einer Thermoplast-Elastomergrundschicht mit einer Dichte von mindestens 0,5 kg/m³ besteht, die aus einem Material besteht, das auf Polyolefin und mindestens einem anorganischen Füllstoff basiert, wobei der Gesamtfüllstoffgehalt zwischen 65 und 95 Gew.-% liegt.

2. Geformtes Bodenbelagsystem nach Anspruch 1, das weiter eine Verstärkungsschicht umfasst, die an die Grundschicht angrenzt und mit ihr verbunden ist, und wobei die Verstärkungsschicht mindestens eine einer Vlies-Scrim-Schicht, einer Textilschicht, wie ein Strick- oder Webstoff, oder eine Faserschicht ist.

3. Geformtes Bodenbelagsystem nach einem der vorstehenden Ansprüche, wobei die Klebeschicht ein auf Wasser basierender Klebstoff ist, vorzugsweise ein Polyurethanklebstoff oder auf Acryl basierender Klebstoff.

4. Geformtes Bodenbelagsystem nach einem der vorstehenden Ansprüche, wobei die Grundschicht aus einem Material hergestellt ist, das aus der Gruppe ausgewählt ist, die aus Ethylenvinylacetat-Copolymer (EVA-Copolymer), hochdichtem Polyethylen, niedrigdichtem Polyethylen, linearem Polyethylen mit niedriger Dichte, Polypropylen oder einer Kombination dieser besteht.

5. Geformtes Bodenbelagsystem nach einem der vorstehenden Ansprüche, wobei die Flockfasern solide Stapelfasern mit einer Länge zwischen 1,5 und 3,5 mm, vorzugsweise zwischen 2 und 2,5 mm umfassen.

6. Geformtes Bodenbelagsystem nach einem der vorstehenden Ansprüche, wobei die Flockfasern aus einem Polyamid hergestellt sind, vorzugsweise Polyamid 6 oder Polyamid 6-6, oder Polyester, vorzugsweise Polyethylenterephthalat oder ein Polyolefin, vorzugsweise Polypropylen oder Polyethylen.

7. Geformtes Bodenbelagsystem nach einem der vorstehenden Ansprüche, wobei die Flockfasern ein Flächengewicht zwischen 100 und 500 g/m², vorzugsweise nicht mehr als 400 g/m² aufweisen.

8. Geformtes Bodenbelagsystem nach einem der vorstehenden Ansprüche, wobei der Abrieb mindestens 6000 Zyklen bis zum Versagen beträgt, vorzugsweise mindestens 8000 bis zum Versagen, vorzugsweise mindestens 10.000 Zyklen bis zum Versagen, wie mit dem Taber-Test gemäß ISO SAE J1530 gemessen.

9. Geformtes Bodenbelagsystem nach einem der vorstehenden Ansprüche, wobei mindestens 6 % und nicht mehr als 15 % der Faserlänge für den Großteil der Fasern innerhalb des Klebemittels liegt, vorzugsweise nicht mehr als 10 %.

10. Geformtes Bodenbelagsystem nach einem der vorstehenden Ansprüche wobei die Höhe der Fasern, die aus der Klebstoffschicht herausstehen, die das Flor bilden, zwischen 1,2 und 3 mm beträgt.

11. Verwendung des geformten Bodenbelagsystems nach einem der vorstehenden Ansprüche als ein schallisolierender Bodenbelag auf dem Hauptboden eines Fahrzeugs mit einem Diesel- oder Benzinmotor, eines Batterieelektrofahrzeugs, von Hybridfahrzeugen, Brennstoffzellenfahrzeugen oder einem autonom fahrenden Fahrzeug.

12. Verfahren zum Produzieren des geformten Bodenbelagsystems nach einem der vorstehenden Ansprüche, mit den Schritten des
- Bereitstellens eines geformten Teils mit mindestens einer Thermoplast-Elastomergrundschicht, einer optional verstärkenden Schicht und einer Abkopplungsschicht, wobei alle Schichten miteinander laminiert und in eine abschließende Form geformt werden;
- Auftragens mindestens einmal des nassen Zusatzstoffs auf der Oberfläche der Thermoplast-Grundschicht, die von der Abkopplungsschicht weggewandt ist;
- Aufbringens der Flockfasern unter Verwenden elektrostatischer Mittel derart, dass die Fasern im Wesentlichen zu der Oberfläche der Thermoplast-Grundschicht senkrecht und innerhalb der Klebemittelschicht mindestens zu 6 % der Faserlänge verankert sind;
- Trocknens des Besatzteils derart, dass sich der Klebstoff verfestigt.

13. Verfahren nach Anspruch 12, wobei das Faseraufbringen in Abschnitten erfolgt.

14. Verfahren nach Anspruch 12 oder 13, wobei die Faserdichte, der Fasertyp und die Faserlänge in unterschiedlichen Bereichen des geformten Teils variiert werden.

15. Verfahren nach Anspruch 12, 13 oder 14, wobei mindestens eine Vorlage, die mit einer Öffnung mit gewünschter Form und gewünschtem Maß versehen ist, zwischen der Oberfläche, die abzudecken ist, und oder der Faser oder dem Klebstoffapplikator verwendet wird, bevor Klebstoff und oder geschnittene Fasern aufgebracht wird/werden.

## Revendications

1. Système de revêtement de plancher moulé pour une atténuation acoustique d'un véhicule automobile comprenant une couche de surface, une couche de découplage (4) et une couche de base imperméable (3) fonctionnant comme une couche barrière dans un système masse ressort acoustique et reliée matériellement à la couche ressort formée par la couche de découplage **caractérisé en ce que** la couche de surface comprend une couche adhésive (2) jointe à la surface de la couche de base et un velours adhérent de floc fibreux (1) se tenant sensiblement sur une extrémité dans l'adhésif formant le revêtement de surface et dans lequel la couche de base imperméable consiste en une couche de base élastomère thermoplastique avec une densité d'au moins 0,5 kg/m³ comprenant un matériau à base de polyoléfine et au moins une charge inorganique, dans lequel le contenu de charge total est entre 65 et 95 % en poids.

2. Système de revêtement de plancher moulé selon la revendication 1, comprenant en outre une couche de renfort adjacente et collée à la couche de base et dans lequel la couche de renfort est au moins l'une d'une couche de canevas non tissé, une couche textile comme un tissu tricoté ou tissé, ou une couche fibreuse.

3. Système de revêtement de plancher moulé selon l'une des revendications précédentes, dans lequel la couche adhésive est un adhésif à base d'eau, de préférence un adhésif à base de polyuréthane ou d'acrylique.

4. Système de revêtement de plancher moulé selon l'une des revendications précédentes, dans lequel la couche de base est faite d'un matériau sélectionné parmi le groupe consistant en un copolymère d'éthylène-acétate de vinyle (EVA), du polyéthylène haute densité, du polyéthylène basse densité, du polyéthylène basse densité linéaire, du polypropylène, ou n'importe quelle combinaison de ce qui précède.

5. Système de revêtement de plancher moulé selon l'une des revendications précédentes, dans lequel le floc fibreux comprend des fibres discontinues solides avec une longueur comprise entre 1,5 et 3,5 mm, de préférence entre 2-2,5 mm.

6. Système de revêtement de plancher moulé selon l'une des revendications précédentes dans lequel le floc fibreux est fait de polyamide, de préférence de polyamide 6 ou de polyamide 6-6, ou de polyester, de préférence de polyéthylène téréphtalate ou d'une polyoléfine, de préférence de polypropylène ou de polyéthylène.

7. Système de revêtement de plancher moulé selon l'une des revendications précédentes dans lequel le floc fibreux présente un poids surfacique compris entre 100 et 500 g/m², de préférence pas plus de 400 g/m².

8. Système de revêtement de plancher moulé selon l'une des revendications précédentes dans lequel l'abrasion est d'au moins 6000 cycles avant rupture, plus préférablement d'au moins 8000 cycles avant rupture, de préférence 10 000 cycles avant rupture, telle que mesurée avec le test Taber selon ISO SAE J1530.

9. Système de revêtement de plancher moulé selon l'une des revendications précédentes dans lequel au moins 6 % et pas plus de 15 % de la longueur de fibre est au sein de la colle pour la majorité des fibres, de préférence pas plus de 10 %.

10. Système de revêtement de plancher moulé selon l'une des revendications précédentes avec la hauteur des fibres sortant de la couche adhésive formant le velours est entre 1,2 et 3 mm.

11. Utilisation du système de revêtement de plancher moulé selon l'une des revendications précédentes en tant que revêtement de plancher isolant sonore sur le plancher principal d'un véhicule avec un moteur diesel ou essence, un véhicule à batterie électrique, des véhicules hybrides, des véhicules à pile à combustible ou un véhicule à pilotage autonome.

12. Procédé de production du système de revêtement de plancher moulé selon l'une des revendications précédentes avec les étapes consistant à
- fournir une partie moulée avec au moins une couche de base élastomère thermoplastique, une couche de renfort optionnelle et une couche de découplage, dans lequel toutes les couches sont laminées ensemble et formées dans la forme finale ;
- appliquer au moins une fois l'additif humide à la surface de la couche de base thermoplastique opposée à la couche de découplage ;
- appliquer les fibres de floc en utilisant des moyens électrostatiques de sorte que les fibres sont sensiblement perpendiculaires à la surface de la couche de base thermoplastique et sont ancrées au sein de la couche de colle au moins avec 6 % de la longueur de fibre ;
- faire sécher la partie de garniture de sorte que l'adhésif devienne solidifié.

13. Procédé selon la revendication 12 dans lequel l'application de fibres est faite en sections.

14. Procédé selon la revendication 12 ou 13, dans lequel la densité de fibres, le type de fibres ou la longueur de fibres varie dans différentes zones de la partie moulée.

15. Procédé selon la revendication 12, 13 ou 14, dans lequel au moins un gabarit muni d'une ouverture de forme et dimension souhaitées est utilisé entre la surface à revêtir et ou l'applicateur de fibres ou d'adhésif, avant d'appliquer de l'adhésif et ou des fibres coupées.
